Europäisches Patentamt

European Patent Office

Office européen des brevets

(11) Numéro de publication: **0 363 312**
**A2**

## (12) DEMANDE DE BREVET EUROPEEN

(21) Numéro de dépôt: 89810683.6

(22) Date de dépôt: 13.09.89

(51) Int. Cl.5: **F16L 13/02**

(30) Priorité: 26.09.88 CH 3564/88

(43) Date de publication de la demande:
11.04.90 Bulletin 90/15

(84) Etats contractants désignés:
AT BE DE FR GB IT NL SE

(71) Demandeur: GABUS, Charles
3, chemin du Lac
CH-1290 Versoix(CH)

(72) Inventeur: GABUS, Charles
3, chemin du Lac
CH-1290 Versoix(CH)

(74) Mandataire: Ardin, Pierre et al
PIERRE ARDIN & CIE 22, rue du Mont-Blanc
CH-1201 Genève(CH)

(54) Raccord métallique comprenant un corps tubulaire.

(57) Le raccord présente une bride (2) solidaire d'un corps tubulaire (1) destiné à être soudé contre la face annulaire d'extrémité d'un tube (4). Une gorge (5) à proximité de l'extrémité à souder diminue le transfert de chaleur vers la bride (2) lors de l'opératioin de soudage et facilite cette dernière. Ce transfert de chaleur vers la bride (2) est encore diminué par la présence d'ailettes de refroidissement (8).

# RACCORD METALLIQUE COMPRENANT UN CORPS TUBULAIRE

L'invention a pour objet un raccord métallique comprenant un corps tubulaire, présentant une face annulaire destinée à être soudée à une extrémité d'un tube de métal.

La soudure des raccords de ce genre à l'extrémité d'un tube est délicate. En effet, on effectue des soudures autogènes et la forte élévation de température nécessaire pour ce genre de soudures provoque souvent des déformations du raccord, lequel devient alors inutilisable en raison du manque d'étanchéité qui en résulte, surtout lorsque le raccord est destiné à équiper une installation devant travailler sous des vides très poussés, de l'ordre d'une fraction de millibar.

L'invention a pour but de remédier à cet inconvénient. A cet effet, le raccord selon l'invention est caractérisé en ce que près de son extrémité destinée à être soudée au tube, il présente une gorge dans sa surface extérieure.

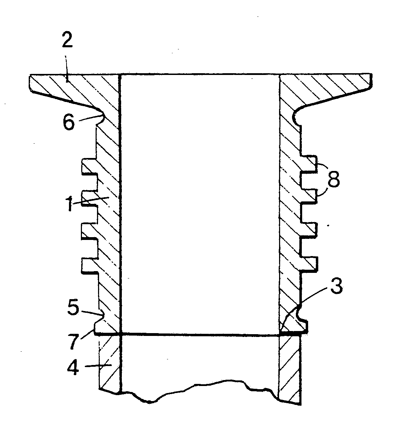

La figure unique du dessin annexé représente schématiquement et à titre d'exemple une forme d'exécution du raccord faisant l'objet de l'invention.

Le raccord illustré comprend un corps tubulaire 1 en métal, par exemple en acier inoxydable, portant à une de ses extrémités une bride 2 bien connue en elle-même et permettant le serrage du raccord contre un autre raccord du même type, à l'aide d'un collier de serrage. L'autre extrémité du corps tubulaire 1 présente une face annulaire 3 destinée à être soudée à un tube 4 en acier inoxydable, faisant partie d'une installation travaillant sous un vide très poussé.

A proximité de ladite face annulaire, le corps 1 présente une gorge 5 destinée à diminuer l'épaisseur de la paroi du tube et donc le transfert de chaleur en direction de la bride 2 pendant l'opération de soudage. Cette diminution de la déperdition de chaleur favorise en outre l'élévation de la température de la partie à souder. En outre, cette diminution de l'épaisseur de la paroi confère au corps 1 une certaine souplesse qui contribue à faciliter l'opération de soudage.

La profondeur de la gorge 5 est avantageusement égale à au moins un quart de l'épaisseur de la paroi et le bord de cette gorge, qui est le plus proche de la face annulaire 3 en est éloigné d'une distance sensiblement égale à la profondeur de la gorge.

Du côté de la bride 2, le corps 1 présente une seconde gorge 6 qui est raccordée à la bride 2 par un arrondi, afin de diminuer les tensions internes du raccord lors du serrage de la bride contre la bride d'un autre raccord au moyen d'un collier de serrage coopérant avec les flans tronçoniques de ces brides.

Entre les gorges 5 et 6, le corps 1 présente quatre nervures annulaires 8 faisant office d'ailettes de refroidissement pendant le soudage du raccord afin de diminuer le transfert de chaleur en direction de la bride 2.

Il y a encore lieu de remarquer que le corps tubulaire 1 présente entre la gorge 5 et la face annulaire 3, un diamètre plus grand que celui du tube 4 et la surépaisseur 7 qui en résulte constitue une réserve de métal pour la soudure autogène, cette dernière pouvant alors être effectuée sans apport extérieur de métal.

Enfin, la bride 2 a été représentée de façon très simple, mais il va de soi que cette bride pourrait être, par exemple, du genre de celle décrite dans le brevet suisse N° 656.444.

On peut prévoir diverses variantes de réalisation du raccord décrit et notamment, il pourrait être dépourvu des nervures 8 ou n'en présenter qu'une seule ou tout autre nombre désiré.

## Revendications

1. Raccord métallique comprenant un corps tubulaire (1), présentant une face annulaire destinée à être soudée à une extrémité d'un tube (3) de métal, **caractérisé** en ce que près de son extrémité destinée à être soudée au tube, il présente une gorge dans sa surface extérieure.

2. Raccord métallique selon la revendication 1, **caractérisé** en ce que sa surface extérieure présente au moins une nervure faisant office d'ailette de refroidissement pendant le soudage du raccord, cette nervure étant située du côté de la gorge qui est opposé à celui qui est le plus proche de l'extrémité destinée à être soudée au tube.

3. Raccord métallique selon la revendication 1 ou 2, **caractérisé** en ce que la profondeur de la gorge est au moins égale à un quart de l'épaisseur de la paroi de son corps tubulaire.

4. Raccord métallique selon la revendication 3, **caractérisé** en ce que le bord de la gorge le plus proche de la face annulaire est distant de cette face d'une valeur sensiblement égale à la profondeur de la gorge.

5. Raccord métallique selon la revendication 4, **caractérisé** en ce que son extrémité comprise entre la gorge et la face annulaire présente un diamètre plus grand que le diamètre extérieur du tube destiné à être soudé contre cette face annulaire.

6. Raccord métallique selon l'une des revendications 1 à 5, présentant une bride à son extrémité opposée à ladite face annulaire, **caractérisé** en ce qu'il présente une seconde gorge extérieure entre son pourtour et ladite bride, le raccord entre cette gorge et la bride étant formé par un arrondi.